(19) Europäisches Patentamt
European Patent Office
Office européen des brevets

(11) **EP 3 225 450 B1**

(12) **EUROPEAN PATENT SPECIFICATION**

(45) Date of publication and mention
of the grant of the patent:
**19.02.2020 Bulletin 2020/08**

(51) Int Cl.:
***B60T 1/087*** *(2006.01)*  ***B60K 11/02*** *(2006.01)*
***B60T 10/02*** *(2006.01)*  ***F16D 57/04*** *(2006.01)*
***F16D 65/12*** *(2006.01)*  ***F16D 65/78*** *(2006.01)*

(21) Application number: **17162447.1**

(22) Date of filing: **22.03.2017**

(54) **COOLING SYSTEM FOR AN INTERNAL COMBUSTION ENGINE COUPLED TO AN AUTOMATIC TRANSMISSION WITH HYDRAULIC RETARDER**

KÜHLSYSTEM FÜR EINE MIT EINEM AUTOMATIKGETRIEBE MIT HYDRAULISCHEM RETARDER GEKOPPELTE BRENNKRAFTMASCHINE

SYSTÈME DE REFROIDISSEMENT POUR UN MOTEUR À COMBUSTION INTERNE COUPLÉ À UNE TRANSMISSION AUTOMATIQUE DOTÉE D'UN RETARDATEUR HYDRAULIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2016 IT UA20161901**

(43) Date of publication of application:
**04.10.2017 Bulletin 2017/40**

(73) Proprietor: **Iveco S.p.A.**
**10156 Torino (IT)**

(72) Inventor: **BENETTI, Antonio**
**25010 San Zeno Naviglio (IT)**

(74) Representative: **Bongiovanni, Simone et al**
**Studio Torta S.p.A.**
**Via Viotti, 9**
**10121 Torino (IT)**

(56) References cited:
WO-A1-95/01500         WO-A1-2004/085807
DE-A1-102013 201 789    US-A- 5 996 762
US-A1- 2013 153 180     US-A1- 2013 205 925

## Description

The invention relates to a cooling system for an internal combustion engine coupled to an automatic transmission with hydraulic retarder.

The use of automatic transmissions in industrial vehicles provided with internal combustion engines, in particular Diesel engines, is becoming more and more common because of the known flexibility and of the easiness of use offered by modern transmissions.

Automatic transmissions are usually equipped with a hydraulic retarder, which uses the oil of the transmission to brake the vehicle. The purpose of the retarder is that of helping the service braking system of the vehicle during slowing down phases and, in particular, it allows the speed of the vehicle to be controlled along a steep slope, thus preventing service brakes from overheating. Basically, the use of an auxiliary braking system by means of retarder makes sure that the vehicle service brakes last longer and ensures a greater efficiency thereof.

Hydraulic retarders have a limited weight, but they are affected by an important drawback, which lies in the high temperature that can be reached by the transmission oil following an intense use of the retarder itself. In many applications, this temperature can exceed the maximum admissible temperature of the transmission oil, thus jeopardizing the braking efficiency of the retarder and, as a consequence, the safety of the vehicle. This phenomenon is even more significant when the vehicle operates in countries characterized by a hot weather.

In order to obtain and effective cooling of the oil of the automatic transmission with an integrated hydraulic retarder, manufacturers usually provide a connection in series to the engine water cooling system and the exchange of heat takes place in an oil-water exchanger, which is usually fitted on the automatic transmission.

Since the water flow rate circulating in the cooling circuit is determined by the revolutions of the water pump operated by the engine and as the pump is connected to the drive shaft with a constant ratio, it can happen that, in some operating conditions of the engine, the water flow rate reaching the heat exchanger for the cooling of the oil is insufficient to evacuate the heat generated. Prior art documents are: WO 95/01500, US2013/205925, DE 10 2013 201789, WO 2004/085807, US 2013/153180 and US 5 996 762.

The object of this patent is to solve this problem by increasing the quantity of water reaching the heat exchanger, though without changing the one usually circulating inside the engine, hence without altering the thermal balance.

Specifically, a water pump is added in parallel to the one of the engine, operated by an electric motor and handled by an electronic control system, which defines the operating rotations thereof and, therefore, its flow rate based on the needs of the entire system.

Furthermore, as part of the cooling fluid flowing out of the radiator of the engine (the coldest point of the circuit) does not cross the engine, the temperature of the liquid flowing into the heat exchanger is lower than the one that there would be in a standard configuration of the circuit, without additional bypass: the cooling liquid flowing into the heat exchanger results from the sum of the hotter liquid flow that has already flown inside the engine and the colder liquid flow that, on the other hand, has not crossed the engine.

By so doing, a greater quantity of heat can be evacuated from the transmission because of the flow rate increase:

$$Q = c \cdot G \cdot \Delta t$$

c = Specific heat of the cooling liquid
G = Mass flow rate of the cooling liquid
$\Delta t$ = Thermal difference between the inlet and the outlet of the water-oil exchanger of the transmission but, at the same time, this additional quantity of heat can be released to the air flowing through the radiator of the engine thanks to the fact that the greater quantity of water reaching the heat exchanger of transmission is also the quantity of water circulating in the radiator of the engine: the quantity of heat released to the air is greater thanks to the greater quantity of water circulating in the radiator of the engine.

The aforesaid object is reached by the invention as it relates to a cooling system for an internal combustion engine coupled to an automatic transmission with integrated hydraulic retarder; said hydraulic retarder uses the automatic transmission oil to generate an auxiliary braking torque applied to the wheels of the vehicle in which the engine is installed; said cooling system comprising: a mechanical pump rotated by said internal combustion engine and adapted to circulate a cooling fluid in a hydraulic circuit; a liquid-air heat exchanger; the hydraulic circuit comprising: a first duct which supplies the cooling fluid coming out of the outlet of the engine cooling circuit to a fluid inlet of the water-oil heat exchanger for cooling said automatic transmission; a second duct which supplies the cooling fluid coming out of the outlet of said automatic transmission to a fluid inlet for cooling said heat exchanger; a third duct which supplies the cooling fluid coming out of the outlet of said heat exchanger to a cooling fluid inlet of the cooling circuit of said engine, **characterized in that it comprises** an electric pump arranged along a fourth by-pass duct which branches from the third duct and flows into the first duct to directly supply the cooling fluid coming out of said heat exchanger to said cooling fluid inlet of said automatic transmission; electronic control means being further provided for controlling the electric motor which operates said electric pump adapted to regulate the rotation speed $\omega p$ of the rotor of the electric pump with reference to the detected rotation speed $\omega m$ of the internal combustion engine; said electronic control means are adapted to receive in input the rotation speed ωm of the internal combustion engine and calculate the instantaneous flow rate Q1 of the mechanical pump; said electronic control means are adapted to process the instantaneous flow rate Q1 calculated and obtain the target rotation speed ωp of the electric motor which provides, by means of the electric pump, a flow rate Q2 substantially equal to the flow rate Q1 so that the flow rate of the cooling fluid that flows in the fourth duct is substantially equal to the flow rate of the fluid that flows in the first duct.

The invention will now be described with reference to the accompanying drawings, which show a preferred embodiment thereof, wherein:

figure 1 shows, in a schematic manner, a cooling system for an internal combustion engine coupled to an automatic transmission with hydraulic retarder according to the invention;
figure 2 shows a transfer function of a first electronic circuit of the system of figure 1; and
figure 3 shows a transfer function of a second electronic circuit of the system of figure 1.

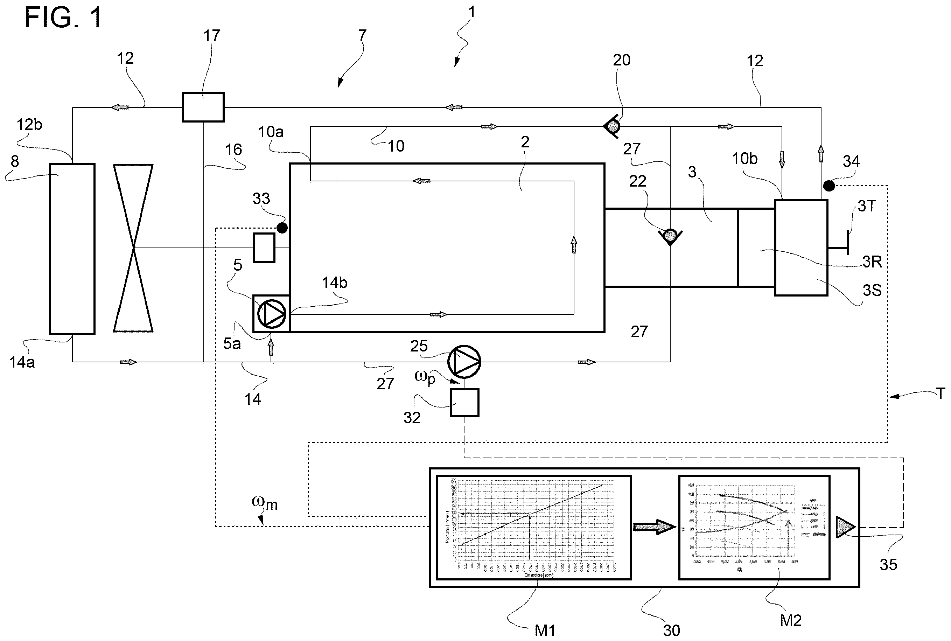

**In figure 1**, number 1 indicates, as a whole, a cooling system for an internal combustion engine 2 (e.g. a Diesel engine shown in a schematic manner) coupled to an automatic transmission 3 (a known automatic transmission shown in a schematic manner) with a hydraulic retarder 3R integrated in the transmission (shown in a schematic manner) with the relative heat exchanger for the oil 3S. As it is known, the hydraulic retarder 3R is adapted to generate an auxiliary braking torque applied to the wheels of the vehicle where the engine 2 is installed using the transmission oil to create a resistant torque on the output shaft of the transmission 3T.

The cooling system 1 comprises a mechanical pump 5 (shown in a schematic manner), which is rotated by the internal combustion engine 2, with a constant ratio relative to the revolutions of the drive shaft, and is adapted to circulate a cooling fluid in a hydraulic circuit 7, where a liquid-air heat exchanger 8 (radiator) is inserted.

The hydraulic circuit 7 comprises:

a first duct 10 which sends the cooling fluid from an outlet 10-a of the cooling circuit of the engine 2 to an inlet 10-b of the liquid-oil exchanger 3S of the automatic transmission 3 (see the direction indicated by the arrow);
a second duct 12 which sends the cooling fluid from an outlet 12-a of the liquid-oil exchanger of the automatic transmission 3S to a cooling fluid inlet 12-b of the heat exchanger (see the direction indicated by the arrow);
a third duct 14 which supplies the cooling fluid from an outlet 14-a of the heat exchanger 8 to a cooling fluid inlet 14-b of the cooling circuit of the engine 2 (see the direction indicated by the arrow). In particular, the third duct 14 is connected at the outlet to a suction inlet 5-a of the mechanical pump 5 which has an outlet communicating directly with the cooling fluid inlet 14-b of the cooling circuit of the engine 2; and a fifth duct 16 which extends between a thermostatic valve 17 arranged along the second duct 12 and the third duct 14. The said thermostatic valve 17 (a known thermostatic valve operating with known logics) is adapted to direct the cooling fluid from the second duct 12 directly (namely, through the fifth duct 16) to the third duct 14 by-passing the heat exchanger 8 when the cooling fluid temperatures are below a given threshold.

**According to the invention** there is provided an electric pump 25 arranged along a fourth by-pass duct 27 (for the engine) which branches from the third duct 14 and flows into the first duct 10, increasing the quantity of cooling fluid supplied to the transmission oil heat exchanger, inlet 10-b. In other words, the by-pass duct allows the cooling fluid flowing out of the heat exchanger 8 to be directly supplied to the inlet 10-b (see the direction indicated by the arrow).

In the circuit described above, thanks to the use of a pump in parallel to the one of the engine, you can increase the water flow rate circulating in the cooling circuit of the system, thus improving efficiency thereof.

Furthermore, a control means 30 is provided for controlling the rotation of the electric motor 32 operating the electric pump 25, which is adapted to regulate the rotation speed ωp of the electric pump 25 rotor with reference to the detected rotation speed ωm of the engine 2. For example, the rotation speed ωm can be detected with a (known) sensor 33 coupled to an output shaft of the engine 2.

The control device 30 of the auxiliary pump starts working only when the temperature of the water flowing out of the heat exchanger of the automatic transmission exceeds a well-defined alarm threshold, intercepted by a (known) sensor 34.

The control device 30 comprises:

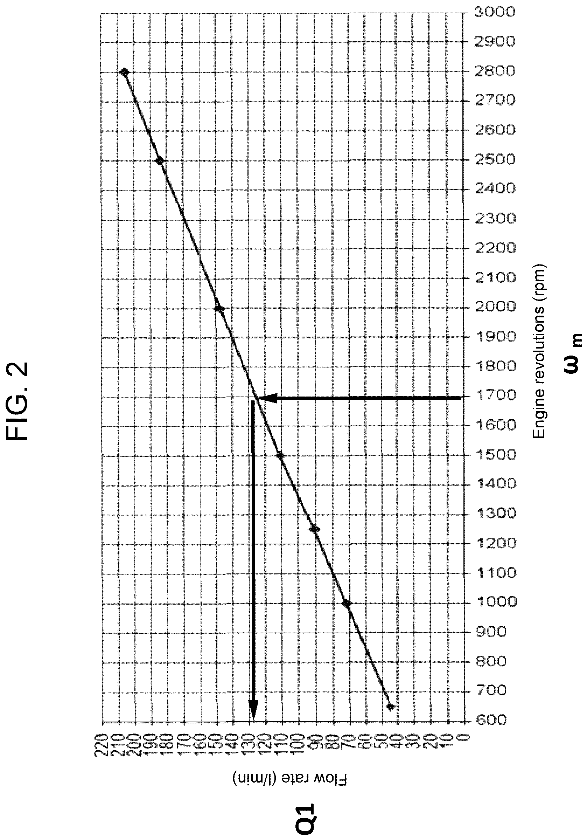

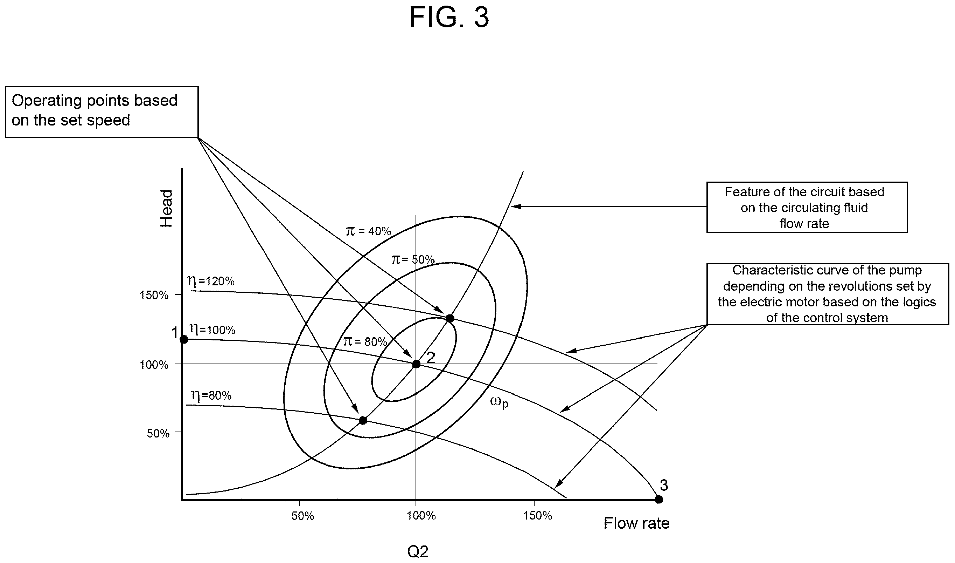

i) a first map M1, which receives, as an input, the rotation speed ωm of the engine and provides, as an output, the value of the instantaneous flow rate Q1 of the mechanical pump 5 based on a transfer function that generates the model of the operation of the mechanical pump (see figure 2); and
ii) a second map M2, which receives, as an input, the calculated instantaneous flow rate Q1 of the mechanical pump 5 and provides, as an output and by means of a transfer function that generates the model of the operation of the electric pump, the target rotation speed ωp of the motor 32, which provides, with the electric pump 25, a flow rate Q2 that is substantially equal to the flow rate Q1 (see figure 3).

The control device 30 comprises a power unit 35, which is adapted to control the motor 32 with a wave shape suited to provide the target rotation speed ωp in such a way that the cooling fluid flow rate flowing in the fourth duct 27 is substantially equal to the fluid flow rate flowing in the first duct 10. The target speed ωp provides, with the electric pump 25, a flow rate Q2 along the duct 27 that is equal to the flow rate Q1 of the mechanical pump 5 at the inlet 14-b and, therefore, at the outlet 10-a and along the first duct 10, as there is substantially no fluid leak inside the engine cooling circuit.

A first non-return vale 20 is provided, which is arranged on the first duct 10 upstream of the area where the fourth duct 27 joins the first duct 10 and is adapted to prevent the cooling fluid from flowing towards the outlet 10-a.

Furthermore, a second non-return valve 22 is provided, which is arranged along said fourth duct 27 and is adapted to prevent the cooling fluid from flowing towards the cooling fluid inlet 14-b.

Therefore, the system described above clearly helps reduce the temperature of the oil of the automatic transmission, thus leaving the features of the mechanical pump of the engine unchanged.

Indeed, the presence of the electric pump 25 increases the water flow rate supplied to the inlet of the liquid-oil exchanger of the automatic transmission, doubling it compared to the condition in which there is no electric pump.

This advantage is obtained with a simple, sturdy and resistant system. The electronic control avoids unbalances between the flows converging in the area where the first duct 10 and the forth duct join one another.

A possible solution to improve the cooling of the transmission oil could have been that of changing the number of operating revolutions of the pump, varying the transmission ratio with the drive shaft. However, this solution involves a plurality of drawbacks, among which there are a greater wear of the pump due to the greater number of revolutions, a possible formation of air bubbles in the liquid in the suction duct when the pump rotates with a greater number of revolutions, greater noise, etc.. Finally, the thermal balance conditions at the different revolutions of the engine are different from the ones of the engine approval and, therefore, the operation of the engine will have to be approved again.

## Claims

1. A cooling system for an internal combustion engine (2) coupled to an automatic transmission (3) with integrated hydraulic retarder (3R); said hydraulic retarder (3R) uses the automatic transmission oil to generate an auxiliary braking torque applied to the wheels of the vehicle in which the engine (2) is installed

   said cooling system comprising:

   a mechanical pump (5) rotated by said internal combustion engine (2) and adapted to circulate a cooling fluid in a hydraulic circuit (7);
   a liquid-air heat exchanger (8);

   the hydraulic circuit (7) comprising:

   - a first duct (10) which supplies the cooling fluid coming out of the outlet (10-a) of the engine cooling circuit to a fluid inlet (10-b) of the water-oil heat exchanger (3S) for cooling said automatic transmission (3);
   - a second duct (12) which supplies the cooling fluid coming out of the outlet (12-a) of said automatic transmission (3) to a fluid inlet (12-b) for cooling said heat exchanger (8);
   - a third duct (14) which supplies the cooling fluid coming out of the outlet (14-a) of said heat exchanger (8) to a cooling fluid inlet (14-b) of the cooling circuit of said engine (2),

   **characterized in that** it comprises an electric pump (25) arranged along a fourth by-pass duct (27) which branches from the third duct (14) and flows into the first duct (10) to directly supply the cooling fluid coming out of said heat exchanger (8) to said cooling fluid inlet (10-b) of said automatic transmission (3); electronic control means (30) being further provided for controlling the electric motor (32) which operates said electric pump adapted to regulate the rotation speed (ωp) of the rotor of the electric pump (25) with reference to the detected rotation speed ωm of the internal combustion engine (2);
   said electronic control means (30) are adapted to receive in input the rotation speed (ωm) of the internal combustion engine (2) and calculate the instantaneous flow rate (Q1) of the mechanical pump (5); said electronic control means (30) are adapted to process the instantaneous flow rate (Q1) calculated and obtain the target rotation speed (ωp) of the electric motor (32) which provides, by means of the electric pump (25), a flow rate (Q2) substantially equal to the flow rate (Q1) so that the flow rate of the cooling fluid that flows in the fourth duct (27) is substantially equal to the flow rate of the fluid that flows in the first duct (10).

2. The system according to claim 1, wherein a first non-return valve (20) is provided arranged on the first duct (10) upstream of the area of confluence of the fourth duct (27) with the first duct (10).

3. The system according to claim 1 or 2, wherein a second non-return valve (22) is provided arranged along said fourth duct (27).

4. The system according to one of the preceding claims, wherein a fifth duct (16) is provided which extends between a thermostatic valve (17) arranged along the second duct (12) and the third duct (14); said thermostatic valve (17) being adapted to direct the cooling fluid from the second duct (12) directly to the third duct (14) by-passing said heat exchanger (8) when the cooling fluid temperatures are below a certain threshold.

5. The system according to one of the preceding claims, wherein the third duct (14) is connected at the outlet to a suction inlet (5-a) of the mechanical pump (5) which has an outlet communicating directly with the cooling fluid inlet (14-b) of the engine cooling circuit (2).

**Patentansprüche**

1. Ein Kühlsystem für einen Verbrennungsmotor (2), welcher mit einem automatischen Getriebe (3) mit integriertem hydraulischen Retarder (3R) gekoppelt ist; wobei der hydraulische Retarder (3R) das Öl des automatischen Getriebes nutzt, um ein zusätzliches Bremsmoment zu generieren, welches auf die Räder des Fahrzeugs wirkt, in welchem der Motor (2) eingebaut ist, wobei das Kühlsystem Folgendes umfasst:

eine mechanische Pumpe (5), angetrieben durch den Verbrennungsmotor (2) und ausgeführt um ein Kühlfluid in einem Hydraulikkreislauf (7) zu zirkulieren;
einen Flüssigkeits/Luft-Wärmetauscher (8);
wobei der Hydraulikkreislauf (7) umfasst:

- eine erste Leitung (10), welche das aus dem Auslass (10-a) des Motorkühlkreislaufs kommende Kühlfluid einem Fluideinlass (10-b) des Wasser-Öl-Wärmetauschers (3S) zur Kühlung des automatischen Getriebes (3) zuführt;
- eine zweite Leitung (12), welche das aus dem Auslass (12-a) des automatischen Getriebes (3) kommende Kühlfluid einem Fluideinlass (12-b) zur Kühlung des Wärmetauschers (8) zuführt;
- eine dritte Leitung (14), welche das aus dem Auslass (14-a) des Wärmetauschers (8) kommende Kühlfluid einem Kühlfluideinlass (14-b) des Kühlkreislaufs des Motors (2) zuführt,

**dadurch gekennzeichnet, dass** er eine elektrische Pumpe (25) umfasst, die entlang einer vierten Umgehungsleitung (27) angeordnet ist, welche von der dritten Leitung (14) abzweigt und in die erste Leitung (10) fließt, um das aus dem Wärmetauscher (8) kommende Kühlfluid direkt dem Kühlfluideinlass (10-b) des automatischen Getriebes (3) zuzuführen;
elektronische Steuermittel (30), die ferner zur Steuerung des Elektromotors (32) vorgesehen sind, welcher die elektrische Pumpe steuert, ausgeführt, um die Drehzahl ($\omega$p) des Rotors der Elektropumpe (25) in Bezug auf die erfasste Drehzahl com des Verbrennungsmotors (2) zu regeln;
wobei die elektronischen Steuermittel (30) ausgeführt sind, um als Eingabe die Drehzahl (com) des Verbrennungsmotors (2) zu empfangen und die momentane Durchflussrate (Q1) der mechanischen Pumpe (5) zu berechnen; wobei die elektronischen Steuermittel (30) ausgeführt sind, um die berechnete momentane Durchflussrate (Q1) zu verarbeiten und die Zieldrehzahl ($\omega$p) des Elektromotors (32) zu ermitteln, welche, mittels der elektrischen Pumpe (25), eine Durchflussrate (Q2) liefert, die im Wesentlichen gleich der Durchflussrate (Q1) ist, sodass die Durchflussrate des Kühlfluids, das in der vierten Leitung (7) fließt, im Wesentlichen gleich der Durchflussrate des Kühlfluids ist, das in der ersten Leitung (10) fließt.

2. Ein System nach Anspruch 1, wobei ein erstes Rückschlagventil (20) an der ersten Leitung (10) stromaufwärts des Zusammenflussbereichs der vierten Leitung (27) mit der ersten Leitung (10) angeordnet ist.

3. Ein System nach Anspruch 1 oder 2, wobei ein zweites Rückschlagventil (22) entlang der vierten Leitung (27) angeordnet ist.

4. Ein System nach einem der vorstehenden Ansprüche, wobei eine fünfte Leitung (16) vorgesehen ist, welche sich zwischen einem thermostatischen Ventil (17), welches entlang der zweiten Leitung (12) angeordnet ist, und der dritten Leitung (14) erstreckt, wobei das thermostatische Ventil (17) ausgeführt ist, das Kühlfluid unter Umgehung des Wärmetauschers (8) von der zweiten Leitung (12) direkt zu der dritten Leitung (14) zu leiten, wenn die Kühlfluidtemperaturen unter einem bestimmten Schwellenwert liegen.

5. Ein System nach einem der vorstehenden Ansprüche, wobei die dritte Leitung (14) am Auslass mit einem Ansaugeinlass (5-a) der mechanischen Pumpe (5) verbunden ist, welche einen Auslass aufweist, der direkt mit dem Kühlfluideinlass (14-b) des Motorkühlkreislaufs (2) in Verbindung steht.

**Revendications**

1. Système de refroidissement pour un moteur à combustion interne (2) couplé à une transmission automatique (3) avec un retardateur hydraulique intégré (3R) ; ledit retardateur hydraulique (3R) utilise l'huile de transmission automatique pour générer un couple de freinage auxiliaire appliqué aux roues du véhicule dans lequel le moteur (2) est installé ledit système de refroidissement comprenant :

une pompe mécanique (5) mise en rotation par ledit moteur à combustion interne (2) et adaptée pour faire circuler un fluide de refroidissement dans un circuit hydraulique (7) ;
un échangeur de chaleur liquide-air (8) ;
le circuit hydraulique (7) comprenant :

- un premier conduit (10) qui fournit le fluide de refroidissement sortant de la sortie (10-a) du circuit de refroidissement de moteur à une entrée de fluide (10-b) de l'échangeur de chaleur eau-huile (3S) pour le refroidissement de ladite transmission automatique (3) ;
- un deuxième conduit (12) qui fournit le fluide de refroidissement sortant de la sortie (12-a) de ladite transmission automatique (3) à une entrée de fluide (12-b) pour le refroidissement dudit échangeur de chaleur (8) ;
- un troisième conduit (14) qui fournit le fluide de refroidissement sortant de la sortie (14-a) dudit échangeur de chaleur (8) à une entrée de fluide de refroidissement (14-b) du circuit de refroidissement dudit moteur (2),

**caractérisé en ce qu'**il comprend une pompe électrique (25) agencée le long d'un quatrième conduit de dérivation (27) qui bifurque du troisième conduit (14) et s'écoule dans le premier conduit (10) pour fournir directement le fluide de refroidissement sortant dudit échangeur de chaleur (8) à ladite entrée de fluide de refroidissement (10-b) de ladite transmission automatique (3) ;
des moyens de commande électroniques (30) étant en outre prévus pour la commande du moteur électrique (32) qui actionne ladite pompe électrique adaptée pour réguler la vitesse de rotation (ωp) du rotor de la pompe électrique (25) en référence à la vitesse de rotation détectée ωm du moteur à combustion interne (2) ;
lesdits moyens de commande électroniques (30) sont adaptés pour recevoir en entrée la vitesse de rotation (ωm) du moteur à combustion interne (2) et calculer le débit instantané (Q1) de la pompe mécanique (5) ; lesdits moyens de commande électroniques (30) sont adaptés pour traiter le débit instantané (Q1) calculé et obtenir la vitesse de rotation cible (ωp) du moteur électrique (32) qui fournit, au moyen de la pompe électrique (25), un débit (Q2) sensiblement égal au débit (Q1) de sorte que le débit du fluide de refroidissement qui s'écoule dans le quatrième conduit (27) soit sensiblement égal au débit du fluide qui s'écoule dans le premier conduit (10).

2. Système selon la revendication 1, dans lequel une première vanne de non-retour (20) est prévue agencée sur le premier conduit (10) en amont de la zone de confluence du quatrième conduit (27) avec le premier conduit (10).

3. Système selon la revendication 1 ou 2, dans lequel une seconde vanne de non-retour (22) est prévue agencée le long dudit quatrième conduit (27).

4. Système selon l'une des revendications précédentes, dans lequel un cinquième conduit (16) est prévu, lequel s'étend entre une vanne thermostatique (17) agencée le long du deuxième conduit (12) et du troisième conduit (14) ; ladite vanne thermostatique (17) étant adaptée pour diriger le fluide de refroidissement du deuxième conduit (12) directement au troisième conduit (14) en contournant ledit échangeur de chaleur (8) lorsque les températures de fluide de refroidissement sont sous un certain seuil.

5. Système selon l'une des revendications précédentes, dans lequel le troisième conduit (14) est raccordé au niveau de la sortie à une entrée d'aspiration (5-a) de la pompe mécanique (5) qui présente une sortie communiquant directement avec l'entrée de fluide de refroidissement (14-b) du circuit de refroidissement de moteur (2).

FIG. 1

M2

M1

30

35

ω p

ω m

## FIG. 2

EP 3 225 450 B1

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9501500 A
- US 2013205925 A
- DE 102013201789
- WO 2004085807 A
- US 2013153180 A
- US 5996762 A